# EUROPÄISCHE PATENTSCHRIFT

(11) **EP 3 225 781 B1**
(45) Veröffentlichungstag und Bekanntmachung des Hinweises auf die Patenterteilung: **13.11.2019**
(21) Anmeldenummer: 16201361.9
(22) Anmeldetag: 30.11.2016
(51) Int. Cl.: F01D 5/14, B63H 1/26, F01D 5/02

(54) **SCHAUFELKANAL, SCHAUFELGITTER UND STRÖMUNGSMASCHINE**
BLADE CHANNEL, BLADE ROW AND TURBOMACHINE
CANAL D'AUBE, GRILLE D'AUBE ET TURBOMACHINE

(30) Priorität: 04.12.2015 DE 102015224376
(43) Veröffentlichungstag der Anmeldung: 04.10.2017
(73) Patentinhaber: MTU Aero Engines AG, 80995 München (DE)
(72) Erfinder: Wolfrum, Nina, 85622 Feldkirchen (DE); Brettschneider, Markus, 85757 Karlsfeld (DE); Mahle, Inga, 77880 Sasbach (DE); Schlemmer, Markus, 84048 Mainburg / Sandelzhausen (DE); Pernleitner, Martin, 85221 Dachau (DE)

(56) Entgegenhaltungen:
- EP-A1- 2 692 986
- EP-A1- 2 835 499
- EP-B1- 2 487 329
- FR-A1- 2 928 174

## Beschreibung

Die Erfindung betrifft einen Schaufelkanal einer Strömungsmaschine nach dem Oberbegriff des Patentanspruchs 1, ein Schaufelgitter für eine Strömungsmaschine und eine Strömungsmaschine. Eine durch einen Strömungskanal geführte Fluidströmung wird regelmäßig durch einen seitlichen Druckgradienten parallel zu Seitenwänden abgelenkt. Da wandnahe Strömungsschichten aufgrund ihrer geringen Geschwindigkeit stärker als wandferne Strömungsschichten abgelenkt werden, wird eine Sekundärströmung gebildet, die einem Hauptstrom überlagert ist. Dies führt zu Wirbeln und unter anderem zu Druckverlusten. Die Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung der Strömungsmaschine nebeneinander angeordneten Schaufeln bzw. Schaufelblättern, die in einem rotationssymmetrischen Strömungskanal, einem sogenannten Ringraum, angeordnet sind und zwischen denen jeweils ein Schaufelkanal ausgebildet ist, in dem die Sekundärströmungen entstehen. Die Schaufelkanäle sind in Umfangsrichtung der Strömungsmaschine jeweils durch eine Druckseite und eine Saugseite der zueinander benachbarten Schaufeln begrenzt. In Radialrichtung der Strömungsmaschine sind die Schaufelkanäle jeweils von einer radial äußeren bzw. gehäuseseitigen Seitenwand und von einer radial inneren bzw. nabenseitigen Seitenwand begrenzt. Gebildet werden die Seitenwände durch einen feststehenden Gehäuseabschnitt, durch einen Rotorabschnitt, durch radial innere Schaufeldeckplatten und/oder durch radial äußere Schaufeldeckplatten. Zur Verringerung der Sekundärströmungen werden in die Seitenwände häufig Konturierungen in Form von Erhebungen und/oder Vertiefungen eingebracht.

Aus dem Stand der Technik ist eine Vielzahl von sogenannten Seitenwandkonturierungen bekannt. Beispielhaft werden die Patente bzw. Patentanmeldungen der Anmelderin EP 2 487 329 B1, EP 2 787 172 A2, und EP 2 696 029 B1 genannt. Desweiteren ist auch die Patentanmeldung FR2928174 A1 bekannt.

Aufgabe der Erfindung ist es, einen Schaufelkanal einer Strömungsmaschine mit reduzierten Sekundärströmungen, ein Schaufelgitter für eine Strömungsmaschine mit reduzierten Sekundärströmungen und eine Strömungsmaschine mit einem verbesserten Wirkungsgrad zu schaffen.

Diese Aufgabe wird gelöst durch einen Schaufelkanal einer Strömungsmaschine mit den Merkmalen des Patentanspruchs 1, durch ein Schaufelgitter mit den Merkmalen des Patentanspruchs 10 2 und durch eine Strömungsmaschine mit den Merkmalen des Patentanspruchs 11.

Ein erfindungsgemäßer Schaufelkanal einer Strömungsmaschine wird in Umfangsrichtung der Strömungsmaschine von einer Druckseite eines Schaufelblattes und von einer gegenüberliegenden Saugseite eines benachbarten Schaufelblattes begrenzt. In Radialrichtung der Strömungsmaschine wird der Schaufelkanal von zwei gegenüberliegenden Seitenwänden begrenzt. In Axialrichtung der Strömungsmaschine erstreckt sich der Schaufelkanal zwischen Anströmkanten und Abströmkanten der Schaufelblätter. Zumindest eine Seitenwand ist mit lokalen Konturierungen versehen ist, von denen zumindest zwei Konturierungen als Erhebungen und zumindest zwei Konturierungen als Vertiefungen ausgebildet sind. Erfindungsgemäß ist zwischen den Konturierungen eine Sattelfläche gebildet, die in einem Umlauf abwechselnd in eine Erhebung und in eine Vertiefung übergeht. Die Erhebungen sind zueinander im Wesentlichen in Umfangsrichtung angeordnet und die Vertiefungen sind zueinander im Wesentlichen in Axialrichtung angeordnet. Die vordere Vertiefung ist nahe der Saugseite und die hintere Vertiefung ist druckseitig angeordnet. Im Kreuzungsbereich der Konturierungen befindet sich die Sattelfläche.

"Erhebung" bedeutet eine lokale Erstreckung der einen Seitenwand in Richtung der gegenüberliegenden Seitenwand. "Vertiefung" bedeutet eine lokale Erstreckung der einen Seitenwand weg von der gegenüberliegenden Seitenwand.

Durch die erfindungsgemäße Seitenwandkonturierung wird ein statisches Druckfeld an der zumindest einen Seitenwand und an den zueinander benachbarten Schaufelblättern derart beeinflusst, dass eine Sekundärströmung in dem Schaufelkanal reduziert wird. Hierdurch werden Strömungsverluste verringert und eine Zuströmung auf eine nachfolgende Schaufelreihe wird verbessert. Die Sattelfläche hat einen Sattelpunkt, der radial außen, radial innen oder auf Höhe eines nicht-konturiertem Flächenabschnitten der Seitenwand liegt. Im Falle einer stetig differenzierbaren Funktion ist ein Punkt ein Sattelpunkt, wenn in ihm der Gradient gleich Null ist und kein lokales Extremum vorliegt. Die Konturierungen und somit die Sattelfläche können an der radial inneren Seitenwand, an der radial äußeren Seitenwand oder an beiden Seitenwänden ausgebildet sein.

Es hat sich als vorteilhaft herausgestellt, wenn sich die Sattelfläche in einem Bereich von 30% bis 70% einer axialen Kanalerstreckung befindet.

Bei einem besonders bevorzugten Ausführungsbeispiel befindet sich die Sattelfläche in einem Bereich von 40% bis 60% der axialen Kanalerstreckung. Hierdurch kann die Sekundärströmung weiter reduziert werden.

Bevorzugterweise befindet sich die Sattelfläche in Umfangsrichtung etwa mittig zwischen den Schaufelblättern, was zu einer weiteren Reduzierung der Sekundärströmung führt.

Es ergibt sich in Draufsicht, d. h. bei einer Blickrichtung radial von außen nach innen, eine kreuzförmige Anordnung der Konturierungen zueinander.

Die Erhebungen und Vertiefungen können unterschiedliche Höhen bzw. Tiefen haben. Hierdurch lässt sich die Sekundärströmung weiter beeinflussen.

Bei einem Ausführungsbeispiel liegt die eine Erhebung mit ihrem Maximum bzw. höchsten Abschnitt an der Druckseite an und die andere Erhebung liegt mit ihrem Maximum an der Saugseite an.

Die druckseitige Erhebung kann stromaufwärts der saugseitigen Erhebung beginnen und die saugseitige Erhebung kann stromabwärts der druckseitigen Erhebung enden. Die Begriffe "stromaufwärts" und "stromabwärts" beziehen sich vereinfacht auf die Strömungsrichtung eines die Strömungsmaschine durchströmenden Hauptstroms entlang der axialen Kanalerstreckung. Bei einer Vielzahl von Schaufelkanälen strömt durch jeden Schaufelkanal ein Hauptstromanteil, der mit den anderen Hauptstromanteilen nach dem Passieren der Schaufelkanäle wieder zum Hauptstrom zusammengeführt wird. Eine eigentliche Umlenkung des Hauptstromanteils in Umfangsrichtung in dem Schaufelkanal wird bei den Begriffen "stromaufwärts" und "stromabwärts" nicht berücksichtigt.

Die Vertiefungen haben bevorzugterweise in Draufsicht eine ovale Form und sind in Axialrichtung zueinander angestellt, wobei sie mit ihrer jeweiligen Längsachse quasi parallel zu einem gegenüberliegenden Abschnitt einer Skelettlinie des saugseitenbildenden Schaufelblattes verlaufen. Hierdurch haben sie eine ungefähre Ausrichtung, die einem in Umfangsrichtung umgelenkten Hauptstromanteil in dem Schaufelkanal entspricht. Sie werden somit in Längsrichtung durchströmt.

Die vordere Vertiefung kann stromaufwärts der druckseitigen Erhebung beginnen und die hintere Vertiefung kann stromabwärts der saugseitigen Erhebung enden. Insbesondere kann die vordere Vertiefung stromaufwärts der Anströmkanten und somit außerhalb des Schaufelkanals beginnen. Hierdurch beginnt eine Beeinflussung des durch den Schaufelkanal strömenden Hauptstromanteils bereits vor dem Eintritt in den Schaufelkanal.

Ein bevorzugtes Schaufelgitter einer Strömungsmaschine hat eine Vielzahl von den erfindungsgemäßen Schaufelkanälen. Durch diese Maßnahme wird jeweils ein statisches Druckfeld in den Schaufelkanälen des Schaufelgitters derart beeinflusst, dass eine Sekundärströmung in dem Schaufelgitter reduziert wird. Es werden Strömungsverluste verringert und eine Zuströmung auf eine nachfolgende Schaufelreihe wird verbessert.

Eine bevorzugte Strömungsmaschine hat zumindest ein erfindungsgemäßes Schaufelgitter. Aufgrund der reduzierten Sekundärströmungen weist eine derartige Strömungsmaschine einen verbesserten Wirkungsgrad gegenüber einer Strömungsmaschine mit einem herkömmlichen Schaufelgitter auf.

Sonstige vorteilhafte Ausführungsbeispiele der Erfindung sind Gegenstand weiterer Unteransprüche.

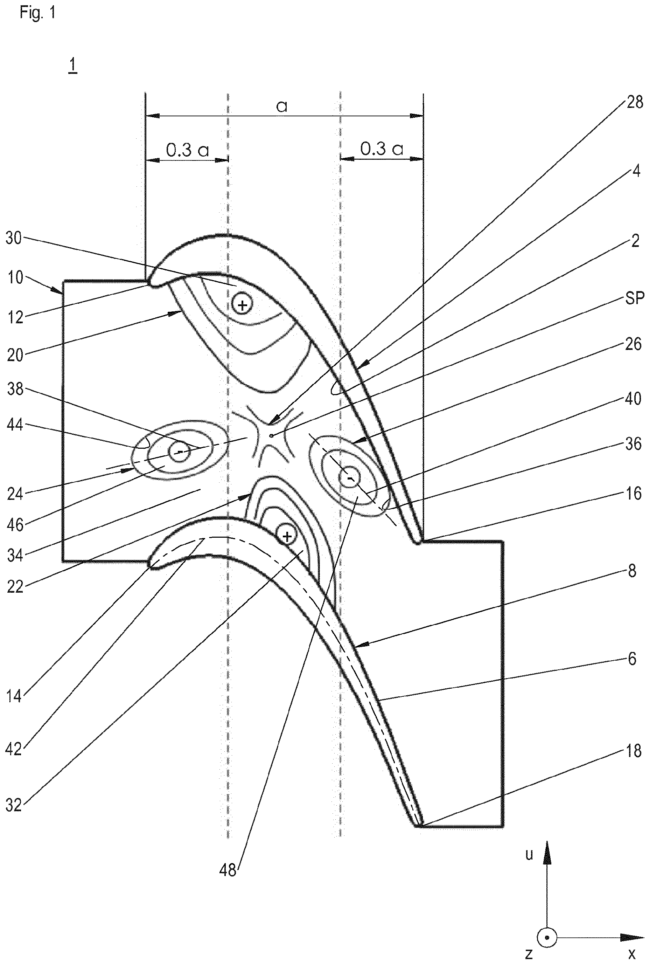

Im Folgenden wird ein bevorzugtes Ausführungsbeispiel der Erfindung anhand einer schematischen Darstellung näher erläutert. Die einzige Figur 1 zeigt in Draufsicht einen Schnitt durch einen erfindungsgemäßen Schaufelkanal einer Strömungsmaschine.

Der Schaufelkanal 1 bildet beispielsweise einen Teil eines Schaufelgitters einer axialen Strömungsmaschine. Die Strömungsmaschine ist bevorzugterweise ein Flugtriebwerk, ohne auf dieses beschränkt zu sein. Beispielsweise kann die Strömungsmaschine auch eine stationäre Gasturbine oder ein Schiffsantrieb sein. Das Schaufelgitter bildet einen Abschnitt eines Ringraums der Strömungsmaschine, der von einem Hauptstrom durchströmt wird. Es besteht aus einer Vielzahl von in Umfangsrichtung u der Strömungsmaschine angeordneten Schaufelkanälen 1, die jeweils von einem Hauptstromanteil durchströmt werden. Die Hauptstromanteile werden in den Schaufelkanäle 1 in Umfangsrichtung u umgelenkt und ergeben in Summe den Hauptstrom. Das Schaufelgitter ist bevorzugterweise ein Laufschaufelgitter, das sich bevorzugterweise im Bereich einer Niederdruckturbine befindet. Der Hauptstrom ist somit bei dem hier gezeigten Ausführungsbeispiel ein Heißgasgemisch, das vereinfacht betrachtet die Strömungsmaschine im Bereich des Schaufelgitters in Axialrichtung x von links nach rechts durchströmt. Bei Strömungsmaschinen in Radialbauweise oder Diagonalbauweise findet die Erfindung aber auch Anwendung. Begriffe wie "Axialrichtung bzw. axial", "Umfangsrichtung" und "Radialrichtung bzw. radial" beziehen sich auf die Drehachse eines Maschinenrotors der Strömungsmaschine und somit auf die zentrale Maschinenachse. Da das Schaufelgitter einen Teil des Maschinenrotors bildet, sind die Begriffe direkt auf das Schaufelgitter und somit auf den Schaufelkanal 1 übertragbar. Begriffe wie "stromaufwärts", "stromabwärts", "vordere" oder "hintere" beziehen sich vereinfacht auf die hier axiale Strömungsrichtung des Hauptstroms durch die Strömungsmaschine im Bereich des Schaufelgitters.

Der Schaufelkanal 1 wird in Umfangsrichtung u der Strömungsmaschine von einer Druckseite 2 eines Schaufelblattes 4 und von einer gegenüberliegenden Saugseite 6 eines benachbarten Schaufelblattes 8 begrenzt ist. In Radialrichtung z der Strömungsmaschine wird der Schaufelkanal 1 von zwei gegenüberliegenden Seitenwänden 10 begrenzt. Aufgrund der Schnittführung und Draufsicht in Figur 1 ist lediglich die radial innere Seitenwand 10 sichtbar. In Axialrichtung x der Strömungsmaschine wird der Schaufelkanal 1 von Anströmkanten 12, 14 und von Abströmkanten 16, 18 der Schaufelblätter 4, 8 begrenzt. Der Schaufelkanal 1 hat hier die axiale Erstreckung bzw. Kanalerstreckung a zwischen den Anströmkanten 12, 14 und den Abströmkanten 16, 18. Die axiale Kanalerstreckung a ist gleich einer axialen Sehnenlänge der Schaufelblätter 4, 8 und entspricht vereinfacht der Strömungsrichtung des Hauptstroms durch die Strömungsmaschine.

Zumindest die hier radial innere Seitenwand 10 ist mit lokalen Konturierungen 20, 22, 24, 26 versehen. "Lokal" bedeutet, dass die Konturierungen vorrangig nur einen begrenzten Flächenbereich der Seitenwand 10 beanspruchen und die Seitenwand 10 ebenfalls nicht-konturierte Flächenabschnitte aufweisen kann. "Nicht-konturierte Flächenabschnitte" sind Flächenabschnitte, die einem ursprünglichen Verlauf der Seitenwand 10 folgen. Der ursprüngliche Verlauf ist ein Kreissegment bezogen auf die Drehachse des Maschinenrotors. In dem hier gezeigten Ausführungsbeispiel sind vier Konturierungen 20, 22, 24, 26 vorgesehen. Zwei Konturierungen 20, 22 sind dabei als Erhebungen und zwei Konturierungen sind als Vertiefungen 24, 26 ausgebildet. "Erhebung" bedeutet eine radiale lokale Erstreckung der Seitenwand 10 gegenüber einem nicht-konturierten Flächenabschnitt der Seitenwand 10 in den Ringraum hinein. "Vertiefung" bedeutet eine lokale Erstreckung der Seitenwand 10 gegenüber einem nicht-konturierten Flächenabschnitt der Seitenwand 10 von dem Ringraum radial weg.

Erfindungsgemäß ist zwischen den Konturierungen 20, 22, 24, 26 eine Sattelfläche 28 gebildet, die in einem Umlauf abwechselnd in eine Erhebung 20, 22 und in eine Vertiefung 24, 26 übergeht. In dem hier gezeigten Ausführungsbeispiel befindet sich die Sattelfläche 28 in einem Bereich von 0,3a bis 0,7a bzw. 30% bis 70% der axialen Kanalerstreckung a, bevorzugterweise in einem Bereich von 40% bis 60% der axialen Kanalerstreckung a. Unter der axialen Kanalerstreckung a wird dabei der Axialabstand zwischen der Vorder- oder Anströmkante der Schaufeln und ihrer Hinter- oder Abströmkanten verstanden. In Umfangsrichtung u betrachtet befindet sich die Sattelfläche 28 in etwa mittig zwischen den Schaufelblättern 4, 8. Die Sattelfläche 28 hat einen Sattelpunkt SP, der radial außen, radial innen oder auf Höhe von den nicht-konturierten Flächenabschnitten der Seitenwand 10 liegt. Im Falle einer stetig differenzierbaren Funktion ist ein Punkt ein Sattelpunkt, wenn in ihm der Gradient gleich Null ist und kein lokales Extremum vorliegt.

Die beiden Erhebungen 20, 22 sind im Wesentlichen in Umfangsrichtung u zueinander angeordnet und die beiden Vertiefungen 24, 26 sind im Wesentlichen in Axialrichtung x zueinander angeordnet. Hierdurch ergibt sich in der gezeigten Draufsicht eine kreuzförmige Anordnung der Konturierungen 20, 22, 24, 26, bei der in einem Umlauf abwechselnd auf eine Erhebung 20, 22 eine Vertiefung 24, 26 folgt und umgekehrt. Im Kreuzungsbereich der Konturierungen 20, 22, 24, 26 befindet sich die Sattelfläche 28. Grundsätzlich können die Erhebungen 20, 22 unterschiedliche oder gleiche Höhen und die Vertiefungen 24, 26 unterschiedliche oder gleiche Tiefen haben.

Die eine Erhebung 20 ist druckseitig und die andere Erhebung 22 ist saugseitig angeordnet. Die druckseitige Erhebung 20 beginnt stromabwärts der Anströmkanten 12, 14 und stromaufwärts der saugseitigen Erhebung 22. Die druckseitige Erhebung 20 geht über ihre gesamte Höhe in die Druckseite 2 über und liegt somit unmittelbar mit ihrem Maximum 30 bzw. höchsten Abschnitt an der Druckseite 2 an.

Die saugseitige Erhebung 22 endet stromabwärts der druckseitigen Erhebung 20. Sie befindet sich hier in einem von Bereich von 30% bis 70% der axialen Kanalerstreckung a. Sie geht über ihre gesamte radiale Höhe in die Saugseite 6 über und liegt somit unmittelbar mit ihrem Maximum 32 an der Saugseite 6 an.

Die hier vordere Vertiefung 24 ist fern der Druckseite 2 und nahe der Saugseite 6 angeordnet, von dieser jedoch über einen zumindest im Wesentlichen nicht-konturierten Flächenabschnitt 34 beabstandet. In Umfangsrichtung u betrachtet ist die hier hintere Vertiefung 26 fern der Saugseite 6 und nahe der Druckseite 2 angeordnet. Mit ihrem Mündungsbereich 36 liegt die hintere Vertiefung 26 direkt an der Druckseite 2 an. Die vordere Vertiefung 24 beginnt stromaufwärts der Anströmkanten 12, 14 und somit außerhalb des Schaufelkanals 1. Sie endet mit der Sattelfläche 28. Die hintere Vertiefung 26 beginnt mit der Sattelfläche 28 und endet stromaufwärts der Abströmkanten 16, 18 und somit innerhalb des Schaufelkanals 1.

In der gezeigten Draufsicht sind die Vertiefungen 24, 26 oval, wobei sie mit ihren Längsachsen 38, 40 in Axialrichtung x zueinander angestellt sind. Die Vertiefungen 24, 26 verlaufen mit ihren Längsachsen 38, 40 quasi parallel zu einem gegenüberliegenden Abschnitt einer Skelettlinie 42 des saugseitenbildenden Schaufelblattes 8. Durch diese Ausrichtung sind die Vertiefungen 24, 26 in Richtung des in dem Schaufelkanal 1 umgelenkten Hauptstromanteils orientiert und werden von diesem längs durchströmt. Ihre Mündungsbereiche 36, 44 haben in etwa eine gleiche Flächengröße. Ebenso haben ihre Minima 46, 48 bzw. tiefsten Abschnitte in etwa eine gleiche Flächengröße.

Offenbart ist ein Schaufelkanal einer Strömungsmaschine, der in Umfangsrichtung der Strömungsmaschine von einer Druckseite eines Schaufelblattes und von einer gegenüberliegenden Saugseite eines benachbarten Schaufelblattes begrenzt ist, der in Radialrichtung der Strömungsmaschine von zwei gegenüberliegenden Seitenwänden begrenzt ist, und der sich in Axialrichtung der Strömungsmaschine zwischen Anströmkanten und Abströmkanten der Schaufelblätter erstreckt, wobei zumindest eine der Seitenwände mit lokalen Konturierungen versehen ist, von denen zumindest zwei Konturierungen als Erhebungen und zumindest zwei Konturierungen als Vertiefungen ausgebildet sind, wobei zwischen den Konturierungen eine Sattelfläche gebildet ist, die in einem Umlauf abwechselnd in eine Erhebung und in eine Vertiefung übergeht, ein Schaufelgitter mit derartigen Schaufelkanälen, sowie eine Strömungsmaschine mit einem derartigen Schaufelgitter.

### Bezugszeichenliste

- 1: Schaufelkanal
- 2: Druckseite
- 4: Schaufelblatt
- 6: Saugseite
- 8: Schaufelblatt
- 10: Seitenwand
- 12: Anströmkante
- 14: Anströmkante
- 16: Abströmkante
- 18: Abströmkante
- 20: Konturierung / druckseitige Erhebung
- 22: Konturierung / saugseitige Erhebung
- 24: Konturierung / saugseitige Vertiefung
- 26: Konturierung / druckseitige Vertiefung
- 28: Sattelfläche
- 30: Maximum / höchster Abschnitt
- 32: Maximum / höchster Abschnitt
- 34: nicht-konturierter Flächenabschnitt
- 36: Mündungsbereich
- 38: Längsachse
- 40: Längsachse
- 42: Skelettlinie
- 44: Mündungsbereich
- 46: Minimum / tiefster Abschnitt
- 48: Minimum / tiefster Abschnitt

- a: axiale Kanalerstreckung
- SP: Sattelpunkt
- u: Umfangsrichtung der Strömungsmaschine
- x: Axialrichtung der Strömungsmaschine / Strömungsrichtung eines Hauptstroms
- z: Radialrichtung der Strömungsmaschine

## Patentansprüche

1. Schaufelkanal (1) einer Strömungsmaschine, der in Umfangsrichtung (u) der Strömungsmaschine von einer Druckseite (2) eines Schaufelblattes (4) und von einer gegenüberliegenden Saugseite (6) eines benachbarten Schaufelblattes (8) begrenzt ist, der in Radialrichtung (z) der Strömungsmaschine von zwei gegenüberliegenden Seitenwänden (10) begrenzt ist, und dessen Erstreckung in Axialrichtung (x) der Strömungsmaschine von Anströmkanten (12, 14) und von Abströmkanten (16, 18) der Schaufelblätter (4, 8) begrenzt ist, wobei zumindest eine der Seitenwände (10) mit lokalen Konturierungen (20, 22, 24, 26) versehen ist, von denen zumindest zwei Konturierungen als Erhebungen (20, 22) und zumindest zwei Konturierungen als Vertiefungen (24, 26) ausgebildet sind, wobei zwischen den Konturierungen (20, 22, 24, 26) eine Sattelfläche (28) gebildet ist, die in einem Umlauf abwechselnd in eine Erhebung (20, 22) und in eine Vertiefung (24, 26) übergeht, wobei die Erhebungen (20, 22) zueinander im Wesentlichen in Umfangsrichtung (u) angeordnet sind und die Vertiefungen (24, 26) zueinander im Wesentlichen in Axialrichtung (x) angeordnet sind, **dadurch gekennzeichnet, dass** die vordere Vertiefung (24) nahe der Saugseite (6) und die hintere Vertiefung (26) druckseitig angeordnet ist, wobei sich im Kreuzungsbereich der Konturierungen (20, 22, 24, 26) die Sattelfläche (28) befindet.

2. Schaufelkanal nach Patentanspruch 1, wobei sich die Sattelfläche (28) in einem Bereich von 30% bis 70% einer axialen Kanalerstreckung (a) befindet.

3. Schaufelkanal nach Patentanspruch 1, wobei sich die Sattelfläche (28) in einem Bereich von 40% bis 60% einer axialen Kanalerstreckung (a) befindet.

4. Schaufelkanal nach Patentanspruch 1, 2 oder 3, wobei sich die Sattelfläche (28) in Umfangsrichtung etwa mittig zwischen den Schaufelblättern (4, 8) befindet.

5. Schaufelkanal nach einem der vorhergehenden Patentansprüche, wobei die Erhebungen (20, 22) unterschiedliche Höhen haben und/oder die Vertiefungen (24, 26) unterschiedliche Tiefen haben.

6. Schaufelkanal nach einem der vorhergehenden Patentansprüche, wobei die eine Erhebung (20) mit ihrem Maximum (30) an der Druckseite (2) anliegt und die andere Erhebung (22) mit ihrem Maximum (32) an der Saugseite (6) anliegt.

7. Schaufelkanal nach einem der vorhergehenden Patentansprüche, wobei die druckseitige Erhebung (20) stromaufwärts der saugseitigen Erhebung (22) beginnt und die saugseitige Erhebung (22) stromabwärts der druckseitigen Erhebung (20) endet.

8. Schaufelkanal nach einem der vorhergehenden Patentansprüche, wobei die Vertiefungen (24, 26) in Axialrichtung (a) zueinander angestellt sind, wobei sie mit ihrer jeweiligen Längsachse (38, 40) quasi parallel zur Skelettlinie (42) des saugseitenbildenden Schaufelblattes (8) verlaufen.

9. Schaufelkanal nacheinem der vorhergehenden Patentansprüche, wobei die vordere Vertiefung (24) stromaufwärts der druckseitigen Erhebung (20) beginnt und die hintere Vertiefung (26) stromabwärts der saugseitigen Erhebung (22) endet.

10. Schaufelgitter einer Strömungsmaschine mit einer Vielzahl von Schaufelkanälen (1) nach einem der vorhergehenden Patentansprüche.

11. Strömungsmaschine mit zumindest einem Schaufelgitter nach Patentanspruch 10.

## Claims

1. Blade channel (1) of a turbomachine, which channel is delimited in the circumferential direction (u) of the turbomachine by a pressure side (2) of an airfoil (4) and by an opposite suction side (6) of an adjacent airfoil (8), and is delimited in the radial direction (z) of the turbomachine by two opposite side walls (10), and the extension of which in the axial direction (x) of the turbomachine is delimited by leading edges (12, 14) and trailing edges (16, 18) of the airfoils (4, 8), at least one of the side walls (10) being provided with local contoured regions (20, 22, 24, 26), of which at least two contoured regions are formed as elevations (20, 22) and at least two contoured regions are formed as depressions (24, 26), a saddle surface (28) being formed between the contoured regions (20, 22, 24, 26) that transitions, in one revolution, alternately into an elevation (20, 22) and into a depression (24, 26), the elevations (20, 22) being arranged with respect to one another substantially in the circumferential direction (u) and the depressions (24, 26) being arranged with respect to one another substantially in the axial direction (x), **characterized in that** the front depression (24) is close to the suction side (6) and the rear depression (26) is arranged on the pressure side, the saddle surface (28) being located in the crossover region of the contoured regions (20, 22, 24, 26).

2. Blade channel according to claim 1, wherein the saddle surface (28) is located in a region of from 30% to 70% of an axial channel extension (a).

3. Blade channel according to claim 1, wherein the saddle surface (28) is located in a region of from 40% to 60% of an axial channel extension (a).

4. Blade channel according to claim 1, 2, or 3, wherein the saddle surface (28) is located approximately centrally between the airfoils (4, 8) in the circumferential direction.

5. Blade channel according to any of the preceding claims, wherein the elevations (20, 22) have different heights and/or the depressions (24, 26) have different depths.

6. Blade channel according to any of the preceding claims, wherein the maximum (30) of one elevation (20) abuts the pressure side (2) and the maximum (32) of the other elevation (22) abuts the suction side (6).

7. Blade channel according to any of the preceding claims, wherein the pressure-side elevation (20) begins upstream of the suction-side elevation (22) and the suction-side elevation (22) ends downstream of the pressure-side elevation (20).

8. Blade channel according to any of the preceding claims, wherein the depressions (24, 26) are inclined with respect to one another in the axial direction (a), wherein, by means of the relevant longitudinal axis (38, 40) thereof, said depressions extend more or less in parallel with the skeleton line (44) of the airfoil (8) forming the suction side.

9. Blade channel according to any of the preceding claims, wherein the front depression (24) begins upstream of the pressure-side elevation (20) and the rear depression (26) ends downstream of the suction-side elevation (22).

10. Blade cascade of a turbomachine comprising a plurality of blade channels (1) according to any of the preceding claims.

11. Turbomachine comprising at least one blade cascade according to claim 10.

## Revendications

1. Canal d'aubes (1) d'une turbomachine, limité dans la direction circonférentielle (u) de la turbomachine d'un côté pression (2) d'une pale (4) et d'un côté aspiration opposé (6) d'une pale adjacente (8), limité dans la direction radiale (z) de la turbomachine par deux parois latérales opposées (10), et dont l'extension est limitée dans la direction axiale (x) de la turbomachine par des bords d'attaque (12, 14) et par des bords de fuite (16, 18) des pales (4, 8), au moins l'une des parois latérales (10) comportant des contours locaux (20, 22, 24, 26), dont au moins deux contours sont conçus sous forme de saillies (20, 22) et au moins deux contours sont conçus sous forme d'évidements (24, 26), une surface en forme de selle (28) étant formée entre les contours (20, 22, 24, 26), laquelle se transforme alternativement en une saillie (20, 22) et en un évidement (24, 26) pendant une révolution, les saillies (20, 22) étant agencées l'une par rapport à l'autre sensiblement dans la direction circonférentielle (u), et les évidements (24, 26) étant agencés l'un par rapport à l'autre sensiblement dans la direction axiale (x), **caractérisé en ce que** l'évidement avant (24) à proximité du côté aspiration (6) et l'évidement arrière (26) sont agencés du côté pression, la surface en forme de selle (28) étant située dans la zone de croisement des contours (20, 22, 24, 26).

2. Canal d'aubes selon la revendication 1, dans lequel la surface en forme de selle (28) est située dans une plage allant de 30 à 70 % d'une extension axiale de canal (a).

3. Canal d'aubes selon la revendication 1, dans lequel la surface en forme de selle (28) est située dans une plage allant de 40 à 60 % d'une extension axiale de canal (a).

4. Canal d'aubes selon la revendication 1, 2 ou 3, dans lequel la surface en forme de selle (28) est située, dans la direction circonférentielle, sensiblement au centre entre les pales (4, 8).

5. Canal d'aubes selon l'une des revendications précédentes, dans lequel les saillies (20, 22) ont des hauteurs différentes et/ou les évidements (24, 26) ont des profondeurs différentes.

6. Canal d'aubes selon l'une des revendications précédentes, dans lequel une saillie (20) vient en butée sur le côté pression (2) par sa majeure partie (30), et l'autre saillie (22) vient en butée sur le côté aspiration (6) par sa majeure partie (32).

7. Canal d'aubes selon l'une des revendications précédentes, dans lequel la saillie du côté pression (20) commence en amont de la saillie du côté aspiration (22), et la saillie du côté aspiration (22) se termine en aval de la saillie du côté pression (20).

8. Canal d'aubes selon l'une des revendications précédentes, dans lequel les évidements (24, 26) sont positionnés dans la direction axiale (a) l'un par rapport à l'autre, lesdits évidements s'étendant suivant leur axe longitudinal respectif (38, 40) plus ou moins parallèlement à la ligne d'ossature (44) de la pale (8) formant le côté aspiration.

9. Canal d'aubes selon l'une des revendications précédentes, dans lequel le l'évidement avant (24) commence en amont de la saillie du côté pression (20) et l'évidement arrière (26) se termine en aval de la saillie du côté aspiration (22).

10. Grille d'aubes d'une turbomachine comportant plusieurs canaux d'aubes (1) selon l'une des revendications précédentes.

11. Turbomachine comportant au moins une grille d'aubes selon la revendication 10.
